# EUROPEAN PATENT SPECIFICATION

(11) **EP 4 714 868 B1**
(45) Date of publication and mention of the grant of the patent: **21.10.2026**
(21) Application number: 24765196.1
(22) Date of filing: 10.07.2024
(51) Int. Cl.: B65G 1/06, B65G 1/04

(54) **GUIDED VEHICLE FOR TRANSPORTING PALLETS ALONG A RACK STRUCTURE**
GEFÜHRTES FAHRZEUG ZUM TRANSPORT VON PALETTEN ENTLANG EINER REGALSTRUKTUR
VÉHICULE GUIDÉ POUR TRANSPORTER DES PALETTES LE LONG D'UNE STRUCTURE D'ÉTAGÈRES

(30) Priority: 25.07.2023 ES 202331382 U
(43) Date of publication of application: 25.03.2026
(73) Proprietor: Mecalux, S.A., 08940 Cornella De Llobregat (Barcelona) (ES)
(72) Inventor: PENALBA GARCIA, Francesc, 08940 Cornellá de Llobregat (ES)
(74) Representative: Isern Patentes y Marcas S.L.
(86) International application number: PCT/ES2024/070434
(87) International publication number: WO 2025/022026

(56) References cited:
- EP-B1- 3 670 390
- ES-U- 1 291 744

## Description

### OBJECT OF THE INVENTION

The purpose of the present application is to provide a guided vehicle for transporting pallets, for example, in smart storage facilities.

More specifically, the invention proposes the development of a guided vehicle provided with a self-centring system to adjust the position of the vehicle on the rolling means.

### BACKGROUND OF THE INVENTION

In large rack structures intended for the storage of products with pallets, a shuttle is used that linearly moves on main rails, i.e., it only moves in one linear direction. To access the pathways located on both sides of the main rails, which have a perpendicular direction, the shuttle incorporates a runner intended to move through the side channels, i.e., in a direction perpendicular to the movement of the shuttle, so that it is responsible for collecting and placing the pallets on the corresponding shelf. Although this arrangement satisfactorily fulfils the main purpose thereof, it implies the use of a complex shuttle with a higher manufacturing cost. Moreover, the described system may reduce the number of operations performed over time, since it does not allow for the simultaneous operation of several shuttles, given the limitations of movement when moving only in one direction.

Furthermore, shuttles or guided vehicles provided with platforms with wheels for movement and/or guidance along the profiles present on the rails or pathways are known, wherein the wheels can move upwards and/or downwards by means of an actuator mechanism, provided specifically to perform this movement, while a second actuator mechanism is used to move the platform. This arrangement implies a greater number of components, which increases the complexity of the shuttle, raising the associated manufacturing and/or maintenance costs, and thus there is a need to improve this type of transport equipment.

A solution to solve the aforementioned problem is found in document no. ES 1291744U, which discloses a guided vehicle for transporting pallets that is provided with actuation means for a first plurality of wheels intended to move in one direction and a second plurality of wheels intended to move in a second direction. The common parts or elements of document no. ES 1291744U form part of the preamble of claim 1.

Although this vehicle is satisfactory in terms of the manufacturing and operation of the vehicle, it should be mentioned that they are provided with platforms with respective groups of wheels to move in both directions X, Z, exchanging the group of wheels that rest on the rolling rails, also requiring other groups of guide wheels that, supported on the side surface of the rolling rail, contribute to keeping the vehicle properly located and centred on the rolling rail.

However, unwanted side movements may occur that can cause friction between the vehicle frame and the guide rails that are part of a storage facility.

Furthermore, the applicant is currently unaware of any invention that has all of the features described in this specification.

### DESCRIPTION OF THE INVENTION

The present invention has been developed with the aim of providing a guided vehicle that is configured as a novelty within the field of application and solves the previously mentioned drawbacks, further contributing other additional advantages that will be obvious from the description below.

Therefore, an object of the present invention is to provide a guided vehicle for transporting pallets, being of the type intended to be moved along a rack structure provided with movement rails to be movable in a first direction and in a second direction that is perpendicular to the first direction, comprising a main frame provided with a first plurality of wheels provided for moving the main frame in the first direction and a second plurality of wheels provided for moving the main frame in the second direction, a loading platform configured to support the pallets which is able to be axially lifted perpendicular to the horizontal plane, in which actuation means are provided, configured to lift the loading platform, controlled by a control unit mounted on the frame, the upwards and downwards movement of the loading platform being able to be linked to the upwards and downwards movement of the first plurality of wheels, the first plurality of wheels being located in movable housings arranged on opposite sides of the frame.

In particular, the invention is characterised in that it includes a self-centring system that acts to centre the frame relative to the movement rails linked to the first plurality of wheels, the self-centring system being provided with retractable wheels operable by an actuator mechanism that is linked to the movement of the movable housing, such that in an extended position, the lowest point of the retractable wheels extends beyond the plane defined by the lowest point of the wheels that form part of the second plurality of wheels, while that in a retracted position, the lowest point of the retractable wheels is located above the plane defined by the lowest point of the wheels that form part of the second plurality of wheels.

Preferably, the self-centring system comprises at least four retractable wheels located in the corner areas of the assembly formed by the frame and the movable housings located at opposite ends of the frame.

The retractable wheels can be oriented in such a way that they can come into contact with a movement rail along which the first plurality of wheels is movable.

Given these features, a system is obtained that allows the vehicle to self-centre on the rolling rails, avoiding having to control and correct the position of the vehicle, being especially suitable for vehicles provided with two sets of a plurality of wheels for different directions. Thus, it is ensured that no unwanted side movements occur that could cause friction between the frame and the guide or rolling rails present in a storage facility, thereby providing retractable guiding means linked to the first plurality of wheels. In other words, this self-centring system acts linked and synchronised with the upwards-downwards movement of the first plurality of wheels.

According to another aspect of the invention, the actuator mechanism for each of the retractable wheels comprises a rack fixed to the main frame, wherein a toothed wheel is engaged coupled to a rocker arm support that is, in turn, rotatably articulated to a rocker arm that the retractable wheel has, such that the linear movement of the toothed wheel along the rack transmits an arcuate path of the retractable wheel, and tensioning means intended to keep the retractable wheel in contact with one side of the movement rail.

The arrangement of the tensioning means in the retractable wheels located on both sides of the vehicle main frame ensures self-centring of the vehicle, since the retractable wheels selfadjust their angle of inclination when coming in contact with the sides of the rolling rails without needing to act or adjust electrically or by software, which simplifies the self-centring system.

Preferably, the tensioning means comprise a push rod that is located in the rocker arm support in a movable and guided manner, the push rod being associated with an elastic spring to keep the push rod in tension, and an extension that extends from the rocker arm that is abutting against the push rod.

According to the invention, the extension has a ball joint at its end in contact with the push rod.

Furthermore, the actuator mechanism may include stop means to limit rotary movement between the rocker arm and the rocker arm support.

Preferably, the aforementioned stop means may consist of two projecting regions present on the rocker arm support that are spaced apart and located in opposite regions relative to the position of an articulation shaft, the two projecting regions defining a pair of contact planes that are located in different spatial planes and each of them intended to abut against a corresponding upper and lower portion of the rocker arm.

Also preferably, the toothed wheel has a section with gear teeth and a second section without gear teeth.

Thus, the guided vehicle described represents an innovative structure with structural and constituent features heretofore unknown for its intended purpose, reasons which, taken together with its usefulness, provide it with sufficient grounds for obtaining the requested exclusivity privilege.

Other features and advantages of the guided vehicle object of the present invention will become apparent from the description of a preferred but not exclusive embodiment illustrated by way of non-limiting example in the attached drawings, in which:

### BRIEF DESCRIPTION OF THE DRAWINGS

Figure 1 is a top perspective view of the guided vehicle according to the present invention;
Figure 2 is a bottom perspective view of the guided vehicle according to the invention;
Figure 3 is a partial elevation view of the guided vehicle with the retractable wheels of the self-centring system in a retracted position;

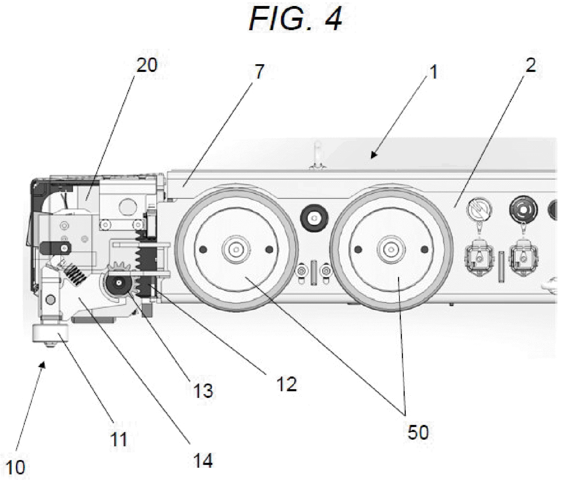

Figure 4 is a partial elevation view of the guided vehicle with the retractable wheels of the self-centring system in an extended position;
Figure 5 is a partial elevation view of one end of the guided vehicle that is in an off-centre position on a movement rail along which it moves in a facility;
Figure 6 is a detailed perspective view of the actuator mechanism that is part of the self-centring system; and
Figure 7 is a detailed elevation view of the actuator mechanism of a retractable wheel.

### DESCRIPTION OF A PREFERRED EMBODIMENT

In view of the aforementioned figures, and in accordance with the adopted numbering, a preferred exemplary embodiment of the invention is disclosed, which comprises the parts and elements indicated and described in detail below.

Moreover, the terms first, second, third, and the like in the description and in the claims are used to distinguish between similar elements and not necessarily to describe a sequential or chronological order. The terms may be interchanged under appropriate circumstances and the embodiments of the invention may operate in sequences other than those described or illustrated herein.

Moreover, the terms upper, lower, up, down, and the like in the description and in the claims are used for descriptive purposes and not necessarily to describe relative positions.

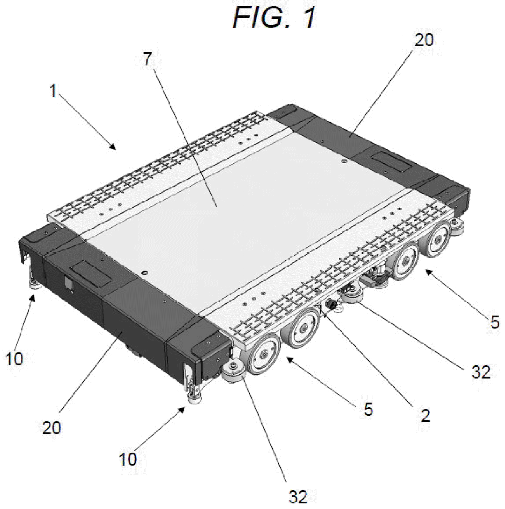

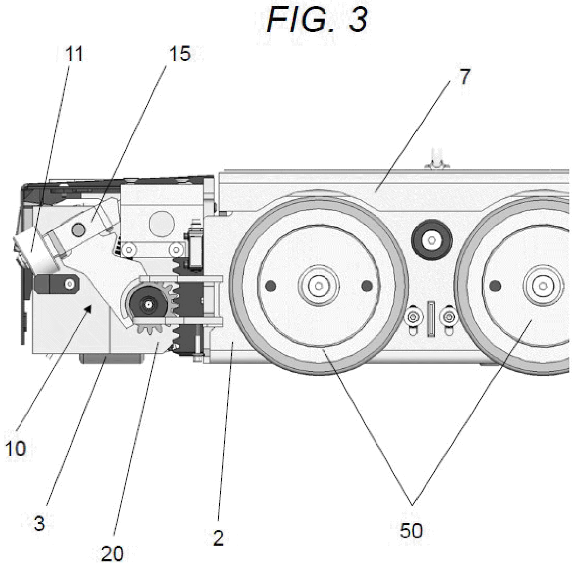

Figures 1 to 3 show an embodiment of the guided vehicle, generally indicated with the reference (1), for transporting pallets, intended to be moved along a conventional rack structure (not shown), which is provided with movement rails to be movable in a first direction and in a second direction that is perpendicular to the first direction. Thus, the guided vehicle (1) operates on the three spatial axes (x,y,z).

The vehicle (1) comprises a box-shaped main frame (2) provided with a first plurality of wheels arranged in such a way to allow for the movement of the vehicle (1) in the first direction, having two wheels (3) separated from one another located on each of two opposite sides. On each of the sides, one of the wheels (3) is a drive wheel that is linked to an electric motor (not shown) by a chain gear system, both electric motors working synchronously, so that both drive wheels rotate at the same speed.

The main frame (2) also includes a second plurality of wheels provided for moving the vehicle (1) in the second direction which has four wheel trains (5), each formed by two wheels (50) linked together by a gear chain (not shown), with two wheel trains (5) located on opposite sides to one another. Two wheel trains (5) are coupled to respective electric motors which act synchronously with one another.

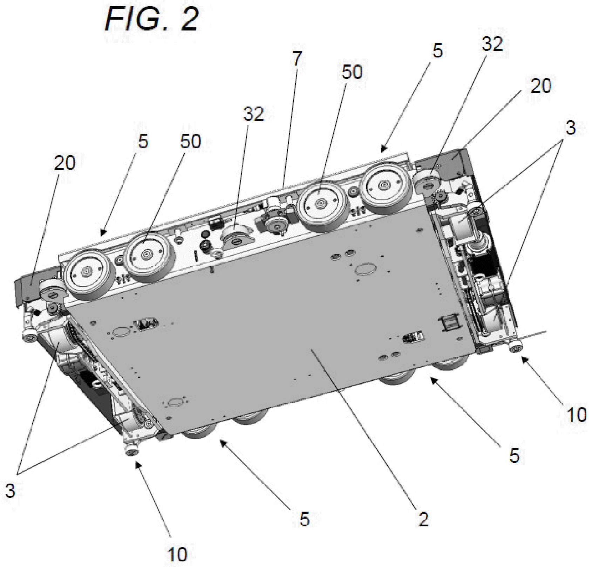

Thus, the first plurality of wheels is on an axis perpendicular to the second plurality of wheels described above, as also shown in figure 2.

A loading platform (7) configured to lift the pallets resting on the rack structure is provided at the upper portion of the main frame (2). This pallet can be axially and vertically lifted perpendicular to the horizontal plane, in which actuation means are provided, configured for lifting the loading platform (7), controlled by a control unit mounted on the frame (2), the upwards and downwards movement of the loading platform (7) being able to be linked to the upwards and downwards movement of the wheels (3).

The aforementioned actuation means comprise a cam system connected to a control unit, such that the movement of a cam is linked to the upwards and downwards movement of the loading platform (7), the upwards and downwards movement of the first plurality of wheels and the upwards and downwards movement of the second plurality of wheels, such that the spatial position of the cams defines three operating positions.

These three previous operating positions correspond to a first position in which the vehicle moves along a main pathway and the loading platform (7) is at the lowest position thereof; a second position in which the vehicle moves along a side channel and the loading platform (7) is at the lowest position thereof; and a third position in which the loading platform (7) is lifted for loading a pallet (not shown).

Once again in reference to the first plurality of wheels, said wheels (3) are located in two movable housings (20) arranged on opposite sides and on the outer portion of the frame (2), the wheels being mounted on rotation shafts (21) which are detachably fixed to the movable housings (20). These housings (20) are formed by drawers defined by four side walls in such a way that they are open at the top and bottom. It should be mentioned that the movable housings (20) move together and simultaneously in an upward or downward direction depending on the functional position to be operated at each moment.

Advantageously, the guided vehicle includes a self-centring system, generally indicated with the reference (10), which acts to centre the main frame (2) relative to the movement rails linked to the first plurality of wheels, the self-centring system being provided with retractable wheels (11) operable by means of an actuator mechanism (described later) that is linked to the movement of the movable housing, such that in an extended position, the lowest point of the retractable wheels extends beyond the plane defined by the lowest point of the wheels (50) that form part of the second plurality of wheels, while that in a retracted position, the lowest point of the retractable wheels (11) is located above the plane defined by the lowest point of the wheels (50) that form part of the second plurality of wheels.

This self-centring system (10) represented comprises four retractable wheels (11) located in the corner areas of the assembly formed by the main frame (2) and the movable housings (20) located at opposite ends of the main frame (2). Each of the retractable wheels (11) is associated with a corresponding actuator mechanism that is described below.

In particular reference to the actuator mechanism for each of the retractable wheels (11), it comprises a rack (12) arranged vertically and fixed to a side wall (21) of the main frame (2), wherein a toothed wheel (13) is engaged coupled to a rocker arm support (14) that is, in turn, rotatably articulated to a rocker arm (15) on an articulation shaft (18) that the retractable wheel (11) has. Thus, the linear movement of the toothed wheel (13) along the rack (12) transmits an arcuate path of the retractable wheel (11) until it engages to or disengages from the movement rail (9).

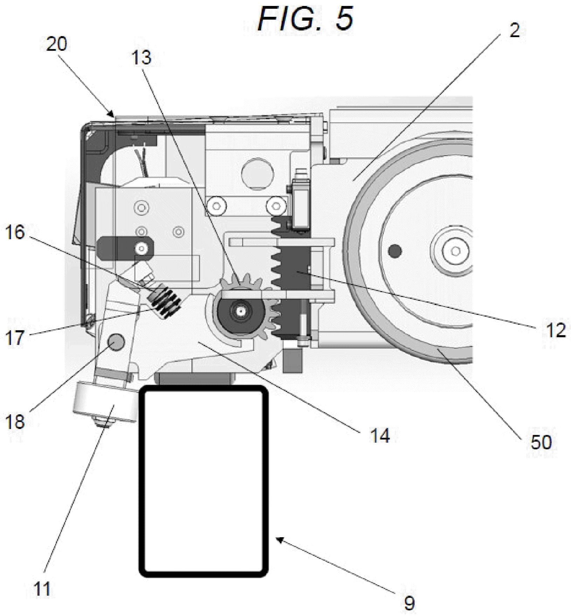

Furthermore, tensioning means are provided to keep the retractable wheel (11) in contact with one side of the movement rail (9), as shown in figure 5.

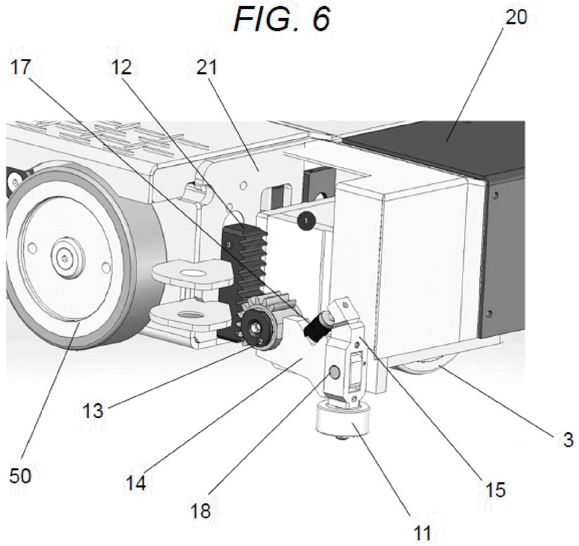

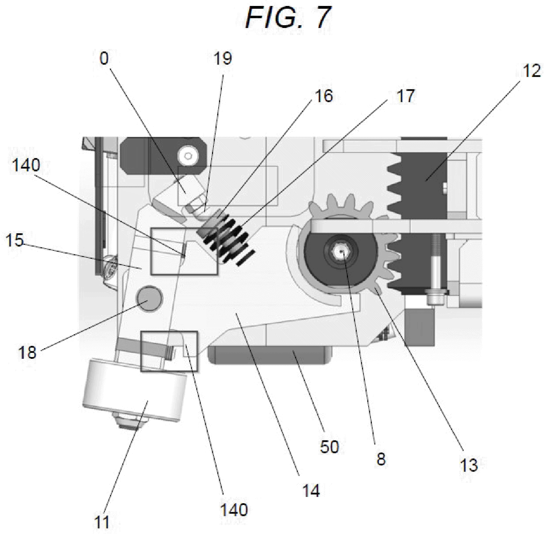

As shown in detail in figures 5 to 7, the tensioning means comprise a mushroom-shaped push rod (16), which is located in the rocker arm support (14) in a movable and guided manner, the push rod (16) being associated with an elastic spring (17) to keep the push rod (16) in tension, and an extension that extends from the rocker arm (15) that is abutting against the push rod (16).

The elastic spring (17) has a dual function; on the one hand, it limits the movement of the rocker arm (15) and, on the other hand, it contributes to centrally positioning the guided vehicle (1) on the two movement rails (9), which is achieved by the combined effect of differential compression between the facing pairs of elastic springs (17) on both sides of the guided vehicle (1).

It should be noted that the extension has a ball joint (19) at its end in contact with the push rod (16).

Furthermore, the actuator mechanism includes stop means to limit rotary movement between the rocker arm (15) and the rocker arm support (14).

Thus, the actuator system described above operates in such a way that if the guided vehicle (1) is off-centre relative to the movement rail (9), the retractable wheel (11) tilts the rocker arm (15). When tilted, the ball joint (19) presses on the push rod (16), which runs through a guide present in the rocker arm support (14) and compresses the elastic spring (17). When in an unbalanced position, the elastic spring (17) will tend to expand and push the guided vehicle (1) to its centred position on the movement rail (9), thus restoring the balance position automatically and progressively.

Said stop means consist of two projecting regions present on the rocker arm support (14), which are more clearly indicated with a rectangular indication, which are spaced apart and located in opposite regions relative to the position of an articulation shaft (19), such as a bolt, the two projecting regions (140) defining a pair of contact planes that are located in different spatial planes and each of them intended to abut against a corresponding upper and lower portion of the rocker arm (15).

As shown in figures 5 to 7, the toothed wheel (8) has a section with gear teeth and a second section without gear teeth and it is fixed to the rocker arm support (14) by means of a rotation shaft (8).

Also, guide wheels (32) are provided for guidance without unwanted side movements of the main frame (2) along the rails formed by two separate and parallel profiles (see figure 13), when the vehicle moves by the movement of the wheel trains (5) by making contact with the horizontal rolling surface of the rails. These guide wheels (32) are coupled by means of a shaft mounted on an extension that projects from the side wall of the frame (2), said wheels provided to make contact with a vertical segment of the rail. These guide wheels (32) are located on the two facing sides where the wheel trains (5) are located.

The details, shapes, dimensions and other accessory elements used to manufacture the guided vehicle of the invention may be suitably substituted for others that do not depart from the scope defined by the claims which are included below.

## Claims

1. A guided vehicle (1) for transporting pallets, intended to be moved along a rack structure provided with movement rails to be movable in a first direction and in a second direction that is perpendicular to the first direction, comprising a main frame (2) provided with a first plurality of wheels provided for moving the main frame (2) in the first direction and a second plurality of wheels provided for moving the main frame (2) in the second direction, a loading platform (7) configured to support the pallets which is able to be axially lifted perpendicular to the horizontal plane, in which actuation means are provided, configured to lift the loading platform (7), controlled by a control unit mounted on the main frame (2), the upwards and downwards movement of the loading platform (7) being able to be linked to the upwards and downwards movement of the first plurality of wheels, the first plurality of wheels (3) being located in movable housings (20) arranged on opposite sides of the main frame (2), **characterised in that** it includes a self-centring system (10) that acts to centre the frame relative to the movement rails linked to the first plurality of wheels, the self-centring system (10) being provided with retractable wheels operable by an actuator mechanism that is linked to the movement of the movable housing (20), such that in an extended position, the lowest point of the retractable wheels (11) extends beyond the plane defined by the lowest point of the wheels (50) that form part of the second plurality of wheels, while that in a retracted position, the lowest point of the retractable wheels (11) is located above the plane defined by the lowest point of the wheels (50) that form part of the second plurality of wheels.

2. The guided vehicle (1) according to claim 1, **characterised in that** the self-centring system (10) comprises at least four retractable wheels (11) located in the corner areas of the assembly formed by the main frame (2) and the movable housings located at opposite ends of the main frame (2), each of the retractable wheels (11) being associated with a corresponding actuator mechanism.

3. The guided vehicle (1) according to any of the preceding claims, **characterised in that** the actuator mechanism for each of the retractable wheels (11) comprises a rack (12) fixed to the main frame (2), wherein a toothed wheel is engaged coupled to a rocker arm support (14) that is, in turn, rotatably articulated to a rocker arm (15) that the retractable wheel (11) has, such that the linear movement of the toothed wheel (13) along the rack (12) transmits an arcuate path of the retractable wheel (11), and tensioning means intended to keep the retractable wheel (11) in contact with one side of the movement rail.

4. The guided vehicle (1) according to claim 3, **characterised in that** the tensioning means comprise a push rod (16) that is located in the rocker arm support (14) in a movable and guided manner, the push rod (16) being associated with an elastic spring (17) to keep the push rod (16) in tension, and an extension that extends from the rocker arm (15) that is abutting against the push rod (16).

5. The guided vehicle (1) according to claim 4, **characterised in that** the extension has a ball joint (19) at its end in contact with the push rod (16).

6. The guided vehicle (1) according to claim 3, **characterised in that** the actuator mechanism includes stop means to limit rotary movement between the rocker arm (15) and the rocker arm support (14).

7. The guided vehicle (1) according to claim 6, **characterised in that** the stop means consist of two projecting regions present on the rocker arm support (14) that are spaced apart and located in opposite regions relative to the position of an articulation shaft (19), the two projecting regions (140) defining a pair of contact planes that are located in different spatial planes and each of them intended to abut against a corresponding upper and lower portion of the rocker arm (15).

8. The guided vehicle (1) according to claim 3, **characterised in that** the toothed wheel has a section with gear teeth and a second section without gear teeth.

## Patentansprüche

1. Geführtes Fahrzeug (1) zum Transport von Paletten, das dazu bestimmt ist, entlang einer Regalstruktur bewegt zu werden, die mit Bewegungsschienen versehen ist, um in einer ersten Richtung und in einer zweiten Richtung, die senkrecht zur ersten Richtung verläuft, bewegbar zu sein, umfassend einen Hauptrahmen (2), der mit einer ersten Vielzahl von Rädern versehen ist, die zum Bewegen des Hauptrahmens (2) in der ersten Richtung vorgesehen ist, und einer zweiten Vielzahl von Rädern, die zum Bewegen des Hauptrahmens (2) in der zweiten Richtung vorgesehen ist, eine Ladeplattform (7), die zum Tragen der Paletten konfiguriert ist und die axial senkrecht zur horizontalen Ebene angehoben werden kann, in der Betätigungsmittel vorgesehen sind, die zum Anheben der Ladeplattform (7) konfiguriert sind, gesteuert durch eine an dem Hauptrahmen (2) montierte Steuereinheit, wobei die Aufwärts- und Abwärtsbewegung der Ladeplattform (7) mit der Aufwärts- und Abwärtsbewegung der ersten Vielzahl von Rädern verbunden werden kann, wobei sich die erste Vielzahl von Rädern (3) in beweglichen Gehäusen (20) befindet, die auf gegenüberliegenden Seiten des Hauptrahmens (2) angeordnet ist, **dadurch gekennzeichnet, dass** es ein Selbstzentrierungssystem (10) beinhaltet, das den Rahmen relativ zu den Bewegungsschienen zentriert, die mit der ersten Vielzahl von Rädern verbunden sind, wobei das Selbstzentrierungssystem (10) mit einziehbaren Rädern versehen ist, die durch einen Betätigungsmechanismus betätigt werden können, der mit der Bewegung des beweglichen Gehäuses (20) verbunden ist, sodass sich in einer ausgefahrenen Position der unterste Punkt der einziehbaren Räder (11) über die Ebene hinaus erstreckt, die durch den untersten Punkt der Räder (50) definiert ist, die Teil der zweiten Vielzahl von Rädern sind, während sich in einer eingefahrenen Position der unterste Punkt der einziehbaren Räder (11) über der Ebene befindet, die durch den untersten Punkt der Räder (50) definiert ist, die Teil der zweiten Vielzahl von Rädern sind.

2. Geführtes Fahrzeug (1) gemäß Anspruch 1, **dadurch gekennzeichnet, dass** das Selbstzentrierungssystem (10) mindestens vier einziehbare Räder (11) umfasst, die in den Eckbereichen der Baugruppe angeordnet sind, die durch den Hauptrahmen (2) und die beweglichen Gehäuse an gegenüberliegenden Enden des Hauptrahmens (2) gebildet ist, wobei jedes der einziehbaren Räder (11) mit einem entsprechenden Betätigungsmechanismus verbunden ist.

3. Geführtes Fahrzeug (1) gemäß einem der vorhergehenden Ansprüche **dadurch gekennzeichnet, dass** der Betätigungsmechanismus für jedes der einziehbaren Räder (11) eine an dem Hauptrahmen (2) befestigte Zahnstange (12), wobei ein Zahnrad in Eingriff mit einer Kipphebelstütze (14) steht, die wiederum drehbar an einem Kipphebel (15) angelenkt ist, den das einziehbare Rad (11) aufweist, sodass die lineare Bewegung des Zahnrads (13) entlang der Zahnstange (12) eine bogenförmige Bahn des einziehbaren Rads (11) überträgt, und Spannmittel umfasst, die dazu bestimmt sind, das einziehbare Rad (11) in Kontakt mit einer Seite der Bewegungsschiene zu halten.

4. Geführtes Fahrzeug (1) gemäß Anspruch 3, **dadurch gekennzeichnet, dass** die Spannmittel eine Schubstange (16) umfassen, die beweglich und geführt in der Kipphebelstütze (14) angeordnet ist, wobei die Schubstange (16) mit einer elastischen Feder (17) verbunden ist, um die Schubstange (16) unter Spannung zu halten, und eine Verlängerung, die sich von dem Kipphebel (15) erstreckt, die an der Schubstange (16) anliegt.

5. Geführtes Fahrzeug (1) gemäß Anspruch 4, **dadurch gekennzeichnet, dass** die Verlängerung an ihrem Ende ein Kugelgelenk (19) aufweist, das mit der Schubstange (16) in Kontakt steht.

6. Geführtes Fahrzeug (1) gemäß Anspruch 3, **dadurch gekennzeichnet, dass** der Betätigungsmechanismus Anschlagmittel beinhaltet, um die Drehbewegung zwischen dem Kipphebel (15) und der Kipphebelstütze (14) zu begrenzen.

7. Geführtes Fahrzeug (1) gemäß Anspruch 6, **dadurch gekennzeichnet, dass** die Anschlagmittel aus zwei vorstehenden Bereichen bestehen, die an der Kipphebelstütze (14) vorhanden sind, die voneinander beabstandet sind und sich in entgegengesetzten Bereichen relativ zur Position einer Gelenkwelle (19) befinden, wobei die beiden vorstehenden Bereiche (140) ein Paar von Kontaktflächen definieren, die sich in verschiedenen räumlichen Ebenen befinden und von denen jede dazu bestimmt ist, an einem entsprechenden oberen und unteren Abschnitt des Kipphebels (15) anzuliegen.

8. Geführtes Fahrzeug (1) gemäß Anspruch 3, **dadurch gekennzeichnet, dass** das Zahnrad einen Abschnitt mit Verzahnung und einen zweiten Abschnitt ohne Verzahnung aufweist.

## Revendications

1. Véhicule guidé (1) pour transporter des palettes, prévu pour être déplacé le long d'une structure d'étagères pourvue de rails de déplacement pour pouvoir se déplacer dans une première direction et dans une seconde direction perpendiculaire à la première, comprenant un châssis principal (2) pourvu d'une première pluralité de roues prévues pour déplacer le châssis principal (2) dans la première direction et une seconde pluralité de roues prévues pour déplacer le châssis principal (2) dans la seconde direction, une plateforme de chargement (7) conçue pour supporter les palettes et peut s'élever axialement perpendiculairement au plan horizontal, dans lequel des moyens d'actionnement conçus pour l'élévation de la plateforme de chargement (7) sont prévus, commandés par une unité de commande montée sur le châssis principal (2), le déplacement vers le haut et vers le bas de la plateforme de chargement (7) pouvant être relié au déplacement vers le haut et vers le bas de la première pluralité de roues, la première pluralité de roues (3) étant située dans des logements mobiles (20) disposés sur des côtés opposés du châssis principal (2), **caractérisé en ce qu'**il comprend un système d'auto-centrage (10) qui agit pour centrer le châssis par rapport aux rails de déplacement reliés à la première pluralité de roues, le système d'autocentrage (10) étant pourvue de roues escamotables actionnables par un mécanisme d'actionnement qui est relié au déplacement du logement mobile (20), de sorte que, dans une position déployée, le point le plus bas des roues escamotables (11) s'étend au-delà du plan défini par le point le plus bas des roues (50) qui font partie de la seconde pluralité de roues, tandis que, dans une position rétractée, le point le plus bas des roues escamotables (11) est situé au-dessus du plan défini par le point le plus bas des roues (50) qui font partie de la seconde pluralité de roues.

2. Véhicule guidé (1) selon la revendication 1, **caractérisé en ce que** le système d'auto-centrage (10) comprend au moins quatre roues escamotables (11) situées dans les zones d'angle de l'ensemble formé par le châssis principal (2) et les logements mobiles situés aux extrémités opposées du châssis principal (2), chacune des roues escamotables (11) étant associée à un mécanisme d'actionnement correspondant.

3. Véhicule guidé (1) selon l'une quelconque des revendications précédentes, **caractérisé en ce que** le mécanisme d'actionnement de chacune des roues escamotables (11) comprend une crémaillère (12) fixée au châssis principal (2), dans laquelle une roue dentée vient en prise accouplée à un support de culbuteur (14) qui est, à son tour, articulé de manière rotative à un culbuteur (15) dont est pourvue la roue escamotable (11), de sorte que le déplacement linéaire de la roue dentée (13) le long de la crémaillère (12) transmet une trajectoire arquée de la roue escamotable (11), et des moyens de tension prévus pour maintenir la roue escamotable (11) en contact avec un côté du rail de déplacement.

4. Véhicule guidé (1) selon la revendication 3, **caractérisé en ce que** les moyens de tension comprennent une tige de poussée (16) qui est située dans le support de culbuteur (14) de manière mobile et guidée, la tige de poussée (16) étant associée à un ressort élastique (17) pour maintenir la tige de poussée (16) en tension, et une extension qui s'étend depuis le culbuteur (15) qui est en butée contre la tige de poussée (16).

5. Véhicule guidé (1) selon la revendication 4, **caractérisé en ce que** l'extension a un joint à rotule (19) à son extrémité en contact avec la tige de poussée (16).

6. Véhicule guidé (1) selon la revendication 3, **caractérisé en ce que** le mécanisme d'actionnement comporte des moyens de butée pour limiter le déplacement de rotation entre le culbuteur (15) et le support de culbuteur (14).

7. Véhicule guidé (1) selon la revendication 6, **caractérisé en ce que** les moyens de butée sont constitués de deux zones en saillie présentes sur le support de culbuteur (14), qui sont espacées et situées dans des zones opposées par rapport à la position d'un arbre d'articulation (19), les deux zones en saillie (140) définissant une paire de plans de contact qui sont situés dans des plans spatiaux différents et dont chacun est prévu pour venir en butée contre une partie supérieure et inférieure correspondante du culbuteur (15).

8. Véhicule guidé (1) selon la revendication 3, **caractérisé en ce que** la roue dentée a une section avec des dents d'engrenage et une seconde section sans dents d'engrenage.
